# EUROPÄISCHE PATENTSCHRIFT

(11) **EP 1 650 493 B1**
(45) Veröffentlichungstag und Bekanntmachung des Hinweises auf die Patenterteilung: **11.04.2012**
(21) Anmeldenummer: 05109579.2
(22) Anmeldetag: 14.10.2005
(51) Int. Cl.: F21V 17/00, B29C 65/16, F21W 101/00

(54) **Leuchteinheit für Fahrzeuge und Herstellungsverfahren**
Lighting unit for vehicles and production method
Unité de lampe pour véhicules et procédé de fabrication

(30) Priorität: 19.10.2004 DE 102004050745
(43) Veröffentlichungstag der Anmeldung: 26.04.2006
(73) Patentinhaber: Hella KGaA Hueck & Co., 59552 Lippstadt (DE)
(72) Erfinder: Dirks, Heinz-Michael, 59558, Lippstadt (DE)

(56) Entgegenhaltungen:
- DE-A1- 4 331 465
- DE-A1- 10 109 595
- DE-A1- 19 830 961
- US-A1- 2002 057 578

## Beschreibung

Die Erfindung betrifft eine Leuchteinheit für Fahrzeuge nach dem Oberbegriff des Patentanspruchs 1.

Aus der DE 101 09 595 A1 ist eine Leuchteinheit für Fahrzeuge bekannt, bei der ein topfförmiges Gehäuse (hier als Reflektor ausgebildet) mit einer lichtdurchlässigen Abschlussscheibe durch Laserschweißen verbunden ist. Zur Herstellung der stoffschlüssigen Verbindung dieser beiden Verbindungsteile werden eine Aufnahme des Gehäuses und ein umlaufender Fuß der Abschlussscheibe im Wesentlichen flächig aneinandergedrückt, wobei durch Anwenden eines Laserstrahls auf diesen Verbindungsbereich die zueinander gekehrten Flächen des Fußes bzw. der Aufnahme aufgeschmolzen und miteinander verbunden werden. Bei der bekannten Leuchteinheit erfolgt eine innige Verbindung der zueinander gekehrten Oberflächen der Verbindungsteile (Gehäuse, Abschlussscheibe).

Ist zumindest eine der zueinander gekehrten Flächen der Verbindungsteile mit einer Überzugsschicht versehen, muss sowohl die Überzugsschicht als auch ein mit der Überzugsschicht versehene Basisschicht des Verbindungsteils aufgeschmolzen werden, damit eine innige Verbindung der zueinander gekehrten Basisschichten der Verbindungsteile eintreten kann. Nachteilig an der bekannten Leuchteinheit ist, dass keine Maßnahmen getroffen sind, die ein Ableiten der die Verbundfestigkeit schmälernden Überzugsschicht ermöglicht.

Aus der US 2002/0057578 A1 ist eine Leuchteinheit für Fahrzeuge bekannt, bei der zueinander gekehrte Verbindungsstege eines Reflektors und einer Lichtscheibe durch Schweißen miteinander verbunden sind. Der Reflektor weist eine Überzugsschicht auf, die durch den Schweißvorgang aufbricht, so dass zueinander gekehrte Flächen von Basisschichten der Verbindungsstege miteinander verschmolzen werden können. Allerdings weisen die Verbindungsstege keine Materialeigenschaften auf, die ein Verschweißen mittels eines durch einen Verbindungssteg hindurchstrahlenden Lasers ermöglicht.

Aufgabe der vorliegenden Erfindung ist es, eine Leuchteinheit für Fahrzeuge derart weiterzubilden, dass eine Scheibe und ein Gehäuse direkt durch Laserschweißen miteinander verbunden werden, so dass die mechanische Festigkeit der Verbindung auch bei Vorliegen einer die Verbindungsfestigkeit schmälernden Überzugsschicht zumindest eines der Verbindungsteile gewährleistet ist.

Zur Lösung dieser Aufgabe weist die Erfindung die Merkmale des Patentanspruchs 1 auf.

Der besondere Vorteil der Erfindung besteht darin, dass durch die erfindungsgemäße Laserschweißgeometrie im laserabsorbierenden Verbindungsteil gewährleistet ist, dass Rückstände einer Überzugsschicht selbsttätig durch Schmelzebewegung während des Laserschweißvorganges aus dem Schweißnahtbereich heraustransportiert werden. Somit kann eine Verbindungsfläche aus einem Basismaterial freigelegt werden zur innigen Verbindung zwischen den gegenüber liegenden Basisschichten der Verbindungsteile. Eine Materialanhäufung des Überzugsmaterials am Rand der Schweißnaht (Verbindungsflächen) wird dabei in Kauf genommen. Vorteilhaft ermöglicht die Erfindung eine solche Verbindungsfestigkeit, wie sie beim Laserschweißen von Verbindungsteilen ohne Überzugsschicht gegeben ist.

Nach einer Weiterbildung der Erfindung ist eine Erhabenheit des Verbindungsteils derart geformt, dass ein gerichteter Schmelzefluss in Richtung eines Randes der Verbindungsflächen und senkrecht zu der Schweißnaht erfolgt. Auf diese Weise kann das unerwünschte Überzugsmaterial selbsttätig abgeschwemmt werden, so dass die zu verbindenden Basisschichten flächig und innig miteinander verschmolzen werden können.

Nach einer Weiterbildung der Erfindung ist ein unteres Verbindungsteil mit mindestens einer Erhabenheit versehen, die einen höchsten Rand in vertikaler Richtung des mit einer Überzugsschicht versehenen Verbindungsteils bildet. Auf diese Weise kann während des Laserschweißvorgangs auch durch Einwirkung der Fügekraft ein Abschwämmen der Überzugsschicht nach außen hin erzielt werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen schematischen Vertikalschnitt durch eine Leuchteinheit,
- Figur 2a): einen schematischen Vertikalschnitt in einem Verbindungsbereich zwischen einem Gehäuse und einer Abdeckscheibe, wobei eine Verbindungsfläche der Abdeckscheibe an einem Verbindungssteg des Gehäuses angelegt ist,
- Figur 2b): einen Vertikalschnitt gemäß Figur 2a) während des Laserschweißvorgangs,
- Figur 2c): einen Vertikalschnitt gemäß Figur 2a) nach Beendigung des Laserschweißvorgangs,
- Figur 3a): eine perspektivische Ansicht eines vorspringenden Verbindungssteges des Gehäuses mit einer Verbindungsfläche gemäß Figur 2a) nach einer ersten Ausführungsform,
- Figur 3b): eine perspektivische Ansicht eines Verbindungssteges des Gehäuses mit einer Verbindungsfläche nach einer zweiten Ausführungsform,
- Figur 3c): eine perspektivische Ansicht eines Verbindungssteges des Gehäuses mit einer Verbindungsfläche nach einer dritten Ausführungsform,

- Figur 3d): eine perspektivische Ansicht eines Verbindungssteges des Gehäuses mit einer Verbindungsfläche nach einer vierten Ausführungsform,
- Figur 3e): eine perspektivische Ansicht eines Verbindungssteges des Gehäuses mit einer Verbindungsfläche nach einer fünften Ausführungsform,
- Figur 3f): eine perspektivische Ansicht eines Verbindungssteges des Gehäuses mit einer Verbindungsfläche nach einer sechsten Ausführungsform und
- Figur 3g): eine perspektivische Ansicht eines Verbindungssteges des Gehäuses mit einer Verbindungsfläche nach einer siebten Ausführungsform.

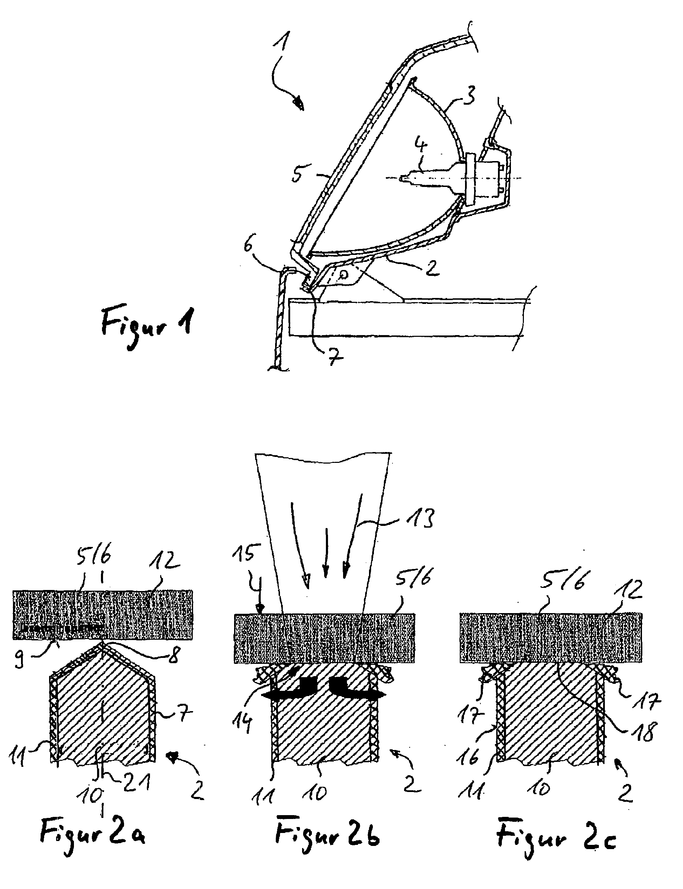

Eine erfindungsgemäße Leuchteinheit 1 für Fahrzeuge, wie beispielsweise in Figur 1 als Scheinwerfer dargestellt, wird vorzugsweise als Leuchte eingesetzt.

Die Leuchteinheit 1 weist ein topfförmiges Gehäuse 2 auf, in dem lichttechnische Komponenten, wie beispielsweise ein Reflektor 3 und eine Lichtquelle 4 angeordnet sind.

Ein vorderer Rand des Gehäuses 2 ist durch eine lichtdurchlässige Abdeckscheibe 5 verschlossen, wobei ein randseitiger Verbindungssteg 6 der Abdeckscheibe 5 durch Laserschweißen mit einem Verbindungssteg 7 des Gehäuses 2 verbunden ist. Die Abdeckscheibe 5 und das Gehäuse 2 bilden hierbei jeweils ein Verbindungsteil. Alternativ kann statt des Gehäuses auch der Reflektor 3 als Verbindungsteil dienen. Dies hängt von der jeweiligen Ausführungsform der Leuchteinheit 1 ab.
In Figur 2a) bis 2c) sind schematisch die zu verbindenden Verbindungsstege 6, 7 der Abdeckscheibe 5 bzw. des Gehäuses 2 in vergrößerter Form dargestellt. In einem ersten Herstellungsschritt erfolgt die Ausrichtung und Anlage der Verbindungsstege 6, 7, wobei der Verbindungssteg 7 des Gehäuses 2 in vertikaler Richtung unterhalb des Verbindungssteges 6 der Abdeckscheibe 5 angeordnet ist. Der Verbindungssteg 7 des Gehäuses 2 ist an einem freien Ende verjüngend zu einer Spitze 8 zulaufend ausgebildet, so dass die Spitze 8 etwa mittig an einer Verbindungsfläche 9 des Verbindungssteges 6 anliegt. Der Verbindungssteg 7 des Gehäuses 2 ist im Wesentlichen aus einem Basismaterial (Basisschicht 10) gebildet, das außenseitig mit einer Überzugsschicht 11 versehen ist. Die Überzugsschicht 11 kann eine durch Bedampfen, Lackieren oder durch ähnliche Oberflächenveredelungsverfahren aufgebrachte Schicht sein, deren Dicke gegenüber der Dicke der Basisschicht deutlich kleiner ist. Der Verbindungssteg 6 der Abdeckscheibe 5 ist aus einem laserlichttransparenten Basismaterial (Basisschicht 12) gebildet und weist keine Überzugsschicht auf.

In einem weiteren Schritt gemäß Figur 2b) wird ein Laserstrahl 13 auf den Verbindungsbereich 14 gerichtet, während eine Anpresskraft 15 auf die Abdeckscheibe 5 ausgeübt wird in dem Sinne, dass die Verbindungsstege 6, 7 eine zusammendrückende Kraft erfahren. Der Laserstrahl 13 durchdringt das laserlichttransparente Basismaterial 12 der Abdeckscheibe 5 und trifft auf das laserabsorbierende Überzugsmaterial 11 bzw. Basismaterial 10 des Verbindungsstegs 7. Es erfolgt ein Aufschmelzen der Überzugsschicht 11 bzw. des Basismaterials 10, wobei durch die dachförmige Formgebung des Endes des Verbindungsstegs 7 das Überzugsmaterial 11 nach außen hin abfließt. Nach Beendigung des Laserschweißvorgangs bzw. Abkühlung des Verbindungsbereichs 14 (Figur 2c) bildet im Wesentlichen das Überzugsmaterial eine Materialanhäufung 17, die seitlich über die Längsseite 16 des Verbindungssteges 7 hinausragt. Die Materialanhäufung 17 enthält überwiegend Basismaterial mit geringen Partikeln des Überzugsmaterial 11. Es kann zusätzlich auch Bestandteile des Basismaterials 10 enthalten. Wesentlich ist, dass auf Grund des selbsttätigen Abflusses der Überzugsschmelze 11 eine Verbindungsfläche 18 des Verbindungsstegs 7 an einer freien Stirnseite desselben freigelegt ist, so dass eine innige und feste Verbindung zwischen der Verbindungsfläche 18 und der Verbindungsfläche 9 des Verbindungsstegs 6 gewährleistet ist.

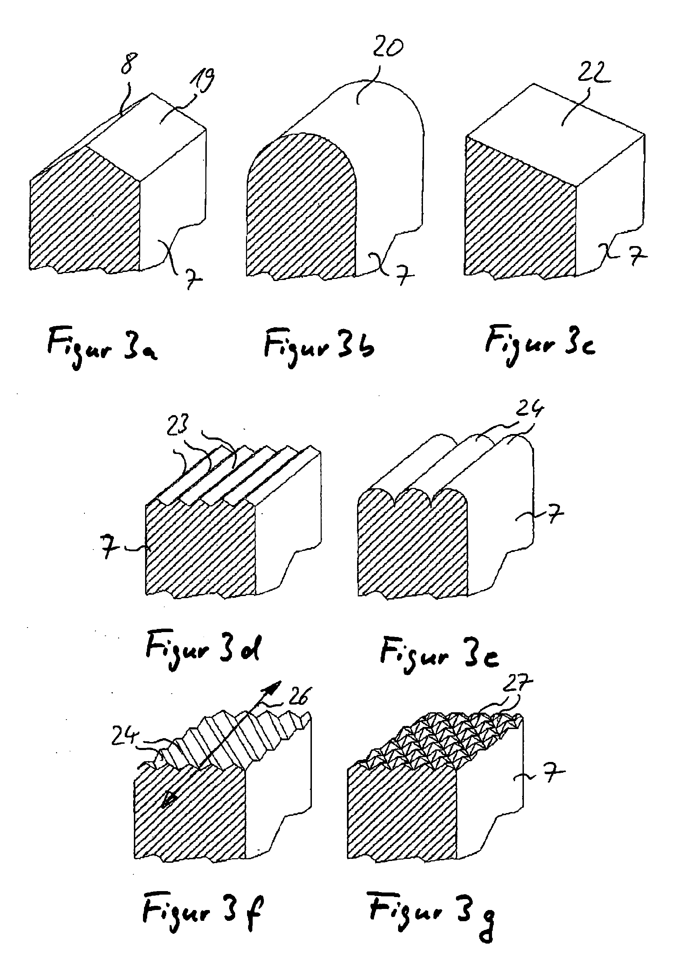

Im vorliegenden Ausführungsbeispiel weist der Verbindungssteg 7 des Gehäuses 2 an einem freien Ende eine dachförmige Erhabenheit 19 auf, die mittig zu einer Spitze 8 verjüngt ist. Die Spitze 8 verläuft in einer Mittelebene 21 des Verbindungssteges 7. Wie besser aus Figur 3a) zu ersehen ist, verläuft die Spitze 8 als Linie entlang einer vorgegebenen Schweißnaht.

Nach einer weiteren Ausführungsform gemäß Figur 3b eines Endes des Verbindungssteges 7 kann eine bogenförmige oder konvexe Erhabenheit 20 vorgesehen sein, bei der - wie im vorherigen Ausführungsbeispiel - die größte Längsausdehnung des Verbindungssteges 7 in einer Mittelebene 21 desselben verläuft.

Nach einer weiteren Ausführungsform gemäß Figur 3c) kann das Ende des Verbindungssteges 7 auch als eine Schrägfläche 22 ausgebildet sein, wobei die größte Erhabenheit randseitig verläuft.

Nach einer Ausführungsform gemäß Figur 3d) des Verbindungssteges 7 kann das Ende desselben auch eine Mehrzahl von dachförmigen Erhabenheiten 23 aufweisen, die reihenförmig nebeneinander liegend angeordnet sind. Nach einer weiteren Ausführungsform gemäß Figur 3e) können auch eine Mehrzahl von nebeneinander angeordneten bogenförmigen Erhabenheiten 24 vorgesehen sein. Nach einer weiteren Ausführungsform gemäß Figur 3f) können dachförmige Erhabenheiten 24 auch in einem spitzen Winkel zu einer Schweißnaht 26 verlaufen.

Nach einer weiteren Ausführungsform gemäß Figur 3g) kann das Ende des Verbindungssteges 7 auch durch prismenförmige Erhabenheiten 27 gebildet sein.

Nach einer nicht dargestellten Ausführungsform können auch beide zueinander gekehrten Enden der Verbindungsstege 6, 7 mit Erhabenheiten vorgesehen sein. Auch wenn nur ein Verbindungssteg mit einem Überzug versehen ist, kann hierdurch ein Abfließen des Überzugsmaterials gefördert werden.

## Patentansprüche

1. Leuchteinheit für Fahrzeuge mit einem topfförmigen Gehäuse (2), das an einem vorderen Rand einen umlaufenden Verbindungssteg (7) aufweist, mit einer lichtdurchlässigen Abdeckscheibe (5), die mit einem äußeren umlaufenden Verbindungssteg (6) durch Laserschweißen mit dem Verbindungssteg (7) des Gehäuses (2) verbunden ist, **dadurch gekennzeichnet, dass** der Verbindungssteg (6) der Abdeckscheibe (5) und/oder der Verbindungssteg (7) des Gehäuses (2) mit einer Überzugsschicht (11) versehen ist und dass ein freies Ende des Verbindungssteges (7), der mit der Überzugsschicht (11) versehen ist, mindestens eine solche Erhabenheit (19, 20, 22, 23, 24, 25, 27) aufweist, dass durch Aufschmelzen derselben beim Laserschweißen die Überzugsschicht (11) aufbricht und eine unterhalb der Überzugsschicht (11) vorhandene Basisschicht (10) direkt mit einer Basisschicht (12) des gegenüberliegenden Verbindungsstegs (6) flächig verschmolzen wird, wobei die Basisschicht (10) und die Überzugsschicht (11) als laserabsorbierendes Material und die Basisschicht (12) des gegenüberliegenden Verbindungssteges (6) als laserlichttransparentes Material ausgebildet sind.

2. Leuchteinheit nach Anspruch 1, **dadurch gekennzeichnet, dass** die Erhabenheit (19, 20, 22, 23, 24, 25, 27) derart ausgebildet ist, dass während des Laserschweißgangs eine zumindest die Überzugsschicht (11) enthaltene Schmelze von einem inneren Bereich der Verbindungsfläche (18) zu einem äußeren Bereich der Verbindungsfläche (18) geschwemmt wird und dass nach dem Laserschweißvorgang an einem äußeren Rand des Verbindungssteges (7) eine Materialanhäufung (17) vorliegt.

3. Leuchteinheit nach Anspruch 1 oder 2, **dadurch gekennzeichnet, dass** die Basisschichten (10, 12) der Verbindungsstege (6, 7) entlang einer Schweißnaht (26) flächig miteinander verbunden sind.

4. Leuchteinheit nach einem der Ansprüche 1 bis 3, **dadurch gekennzeichnet, dass** die Erhabenheit (19, 20) bogenförmig oder spitz zulaufend oder als Schrägfläche (22) ausgebildet ist.

5. Leuchteinheit nach einem der Ansprüche 1 bis 4, **dadurch gekennzeichnet, dass** die Erhabenheit (19, 20) in einer Längsmittelebene (21) des Verbindungsstegs (7) oder außermittig der Längsmittelebene (21) verläuft.

6. Leuchteinheit nach einem der Ansprüche 1 bis 5, **dadurch gekennzeichnet, dass** der Verbindungssteg (7) der Abdeckscheibe (5) und/oder des Gehäuses (2) eine Mehrzahl von gleichförmig angeordneten Erhabenheiten (23, 24, 25, 27) aufweist.

## Claims

1. Vehicle lamp unit with a cup-shaped housing (2) that has, at its front edge, a peripheral connecting rib (7) and with a transparent cover lens (5) that is connected with an outer, peripheral connecting rib (6) by laser welding to the connecting rib (7) of the housing (2), **characterized in that** the connecting rib (6) of the cover lens (5) and/or the connecting rib (7) of the housing (2) is provided with a coating layer (11) and that a free end of the connecting rib (7) that is provided with the coating layer (11) has at least one projecting part (19, 20, 22, 23, 24, 25, 27) such that, by melting this projecting part during the laser welding, the coating layer (11) is broken open and a base layer (10) present underneath the coating layer (11) is fused over a surface area directly with a base layer (12) of the opposing connecting rib (6), wherein the base layer (10) and the coating layer (11) are formed as laser-absorbing materials and the base layer (12) of the opposing connecting rib (6) is formed as a material that is transparent to laser light.

2. Lamp unit according to Claim 1, **characterized in that** the projecting part (19, 20, 22, 23, 24, 25, 27) is formed such that, during the laser welding process, a molten mass containing at least the coating layer (11) is forced out from an inner region of the connecting surface (18) to an outer region of the connecting surface (18) and that, after the laser welding process, there is an accumulation of material (17) at an outer edge of the connecting rib (7).

3. Lamp unit according to Claim 1 or 2, **characterized in that** the base layers (10, 12) of the connecting ribs (6, 7) are connected to each other over a surface area along a weld seam (26).

4. Lamp unit according to one of Claims 1 to 3, **characterized in that** the projecting part (19, 20) is formed with a curved or pointed shape or as an oblique surface (22).

5. Lamp unit according to one of Claims 1 to 4, **characterized in that** the profile of the projecting part (19, 20) is in the longitudinal center plane (21) of the connecting rib (7) or off-center relative to the longitudinal center plane (21).

6. Lamp unit according to one of Claims 1 to 5, **characterized in that** the connecting rib (7) of the cover lens (5) and/or of the housing (2) has a plurality of uniformly arranged projecting parts (23, 24, 25, 27).

## Revendications

1. Unité de feux pour véhicules automobiles avec un boîtier sous forme d'un pot (2) qui présente sur un bord avant une traverse de liaison (7) périphérique, avec un voyant extérieur (5) translucide qui est relié à la traverse de liaison (7) du boîtier (2) par une traverse de liaison périphérique extérieure (6) au moyen de soudage par laser,
**caractérisée en ce que**
la traverse de liaison (6) du voyant extérieur (5) et/ou la traverse de liaison (7) du boîtier (2) sont couvertes d'une couche de revêtement (11) et qu'un bout libre de la traverse de liaison (7) qui est couverte de la couche de revêtement (11) présente au moins une telle surface surélevée (19, 20, 22, 23, 24, 25, 27) que par fusion de celle-ci lors du soudage par laser la couche de revêtement (11) brise et une couche de base (10) se trouvant au-dessous de la couche de revêtement (11) se fond directement sur la surface avec une couche de base (12) de la traverse de liaison (6) opposée, la couche de base (10) et la couche de revêtement (11) étant conçues de matériau absorbant le laser et la couche de base (12) de la traverse de liaison (6) opposée étant conçue de matériau transparent au faisceau laser.

2. Unité de feux selon la revendication 1, **caractérisée en ce que** la surface surélevée (19, 20, 22, 23, 24, 25, 27) est conçue de telle manière que lors du procédé de soudure par laser au moins la fonte incluant la couche de revêtement (11) soit emportée d'une zone intérieure de la surface de liaison (18) à une zone extérieure de la surface de liaison (18) et qu'après le procédé de soudure par laser un entassement de matière (17) se présente sur un bord extérieur de la traverse de liaison (7).

3. Unité de feux selon la revendication 1 ou 2, **caractérisée en ce que** les couches de base (10, 12) des traverses de liaison (6, 7) sont reliées entre eux de manière surfacique le long de la soudure (26).

4. Unité de feux selon l'une des revendications 1 à 3, **caractérisée en ce que** la surface élevée (19, 20) est conçue de manière arquée ou se termine en pointe ou sous forme de biseau (22).

5. Unité de feux selon l'une des revendications 1 à 4, **caractérisée en ce que** la surface élevée (19, 20) s'étend dans un plan longitudinal médian (21) de la traverse de liaison (7) ou non centrée par rapport au plan longitudinal médian (21).

6. Unité de feux selon l'une des revendications 1 à 5, **caractérisée en ce que** la traverse de liaison (7) du voyant extérieur (5) et/ou du boîtier (2) présente une majorité de surfaces surélevées (23, 24, 25, 27) disposées de manière uniforme.
